Europäisches Patentamt

European Patent Office

Office européen des brevets

(19)

(11) Veröffentlichungsnummer: **0 025 078**
**B1**

(12) **EUROPÄISCHE PATENTSCHRIFT**

(45) Veröffentlichungstag der Patentschrift: **13.07.83**

(51) Int. Cl.³: **G 03 B 27/73**

(21) Anmeldenummer: **80101030.7**

(22) Anmeldetag: **03.03.80**

(54) Verfahren und Vorrichtung zur Überprüfung des Betriebszustandes einer Kopiervorrichtung und der nachgeschalteten Entwicklungsvorrichtung.

(30) Priorität: **23.03.79 DE 2911567**

(43) Veröffentlichungstag der Anmeldung:
**18.03.81 Patentblatt 81/11**

(45) Bekanntmachung des Hinweises auf die Patenterteilung:
**13.07.83 Patentblatt 83/28**

(84) Benannte Vertragsstaaten:
**BE CH FR GB IT NL**

(56) Entgegenhaltungen:
**EP - A - 0 003 310**
**DE - A - 497 487**
**DE - A - 1 807 403**
**DE - A - 2 246 466**
**DE - A - 2 821 732**
**DE - B - 2 356 277**
**US - A - 3 552 288**

(73) Patentinhaber: **AGFA-GEVAERT Aktiengesellschaft**
**D-5090 Leverkusen 1 (DE)**

(72) Erfinder: **Findeis, Günter**
**Wallbergstrasse 18D**
**D-8021 Sauerlach (DE)**
Erfinder: **Fergg, Berthold, Dr.**
**Enzianring 3**
**D-8021 Taufkirchen (DE)**
Erfinder: **Osegowitsch, Viktor**
**Ahornring 47**
**D-8021 Taufkirchen am Wald (DE)**
Erfinder: **Huber, Hans Peter**
**Säbenerstrasse 100**
**D-8000 München 90 (DE)**
Erfinder: **Meckl, Heinz, Dr.**
**Am Katterbach 54**
**D-5060 Bergisch Gladbach 2 (DE)**

## Verfahren und Vorrichtung zur Überprüfung des Betriebszustandes einer Kopiervorrichtung und der nachgeschalteten Entwicklungs-vorrichtung

Die Erfindung betrifft ein Verfahren zur Überprüfung des Betriebszustandes einer Kopiervorrichtung und der nachgeschalteten Entwicklungsvorrichtung beim Herstellen von Farbkopen mittels Auswertung von Kopien von Eichvorlagen.

Bei den bisherigen Eichverfahren aufgrund der Beurteilung einer Kopie einer Eichvorlage ging man von der Voraussetzung aus, daß der Entwicklungsprozeß der belichteten Eichvorlagenkopie mit all seinen das Entwicklungsergebnis beeinflussenden Faktoren, wie Zusammensetzung und Temperatur der Bäder, innerhalb der zulässigen Grenzen liegt. Diese stillschweigend gemachte Voraussetzung trifft in der überwiegenden Zahl der Fälle zu; falls diese Voraussetzung jedoch nicht gegeben ist, ist eine Änderung der Einstellung des Kopiergerätes die Folge, die in Wirklichkeit eine Falscheinstellung des Gerätes bewirkt.

Aufgabe der Erfindung ist es, die gemeinsam zum Bildergebnis beitragenden Prozesse der Belichtung und der Entwicklung einzeln überprüfbar zu machen.

Diese Aufgabe wird gelöst durch die im Anspruch 1 beschriebene Erfindung.

Durch die Durchführung einer Testbelichtung auf das gleichen Entwicklungsbedingungen unterworfene Kopiermaterial mit einer fest vorgegebenen Kopierlichtmenge und -farbe erhält man eine Möglichkeit zur Überprüfung des Entwicklungsvorgangs allein und damit die Möglichkeit, die Kopie der Eichvorlage zur Beurteilung des Zustandes des Kopiergerätes, bereinigt von den Einflüssen der Entwicklung, auszuwerten.

Weitere Einzelheiten und Vorteile der Erfindung sowie einer Vorrichtung zur Durchführung des Verfahrens ergeben sich aus den Unteransprüchen im Zusammenhang mit der Beschreibung eines bevorzugten Ausführungsbeispiels der Erfindung, das nachfolgend anhand von Figuren eingehend erläutert ist.

Es zeigen:

Fig. 1 und 1a Kopiervorrichtung und Entwicklungsvorrichtung in schematischer Darstellung, deren Betriebszustand überprüft werden soll,

Fig. 2 ein Eichnegativ zur Herstellung definierter Eichvorlagenkopien,

Fig. 3 eine Einrichtung zur Herstellung von Testkopien und

Fig. 4 ein Beispiel einer Eichvorlagenkopie mit angrenzender Testkopie.

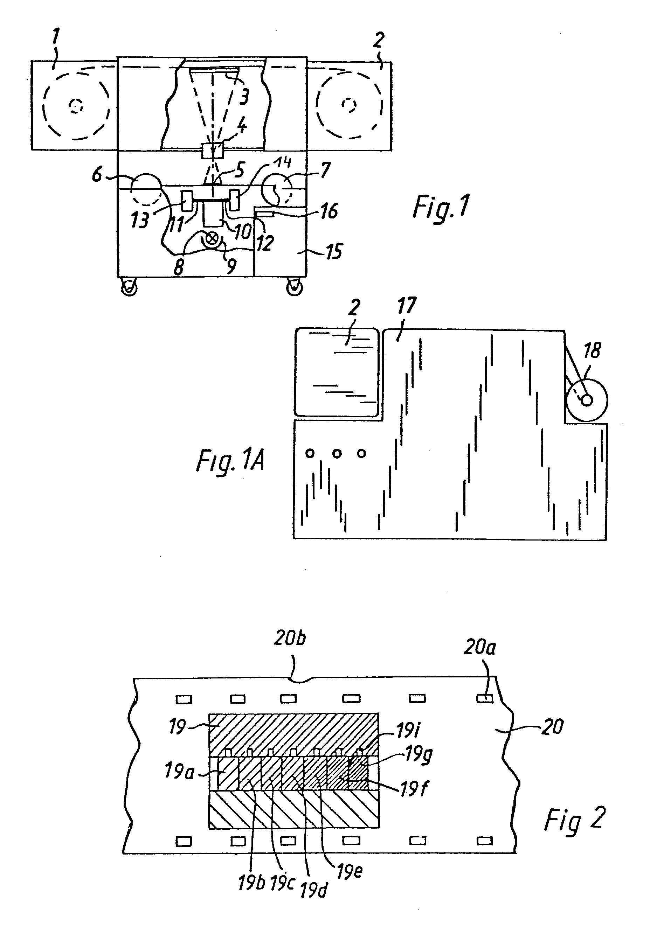

In Fig. 1 ist schematisch ein Rollenkopiergerät dargestellt mit automatische Kopieträgerfortschaltung von einer Vorratskassette 1 in eine Aufwickelkassette 2, wobei an geeigneter Stelle ein Kopierfenster 3 in der Führungsbahn des Kopiermaterials vorgesehen ist. Ein Objektiv 4 bildet ein Vorlagenfenster 5 auf das Kopierfenster 3 ab, wobei durch das Vorlagenfenster 5 wiederum automatisch ein Vorlagenstreifen von einer Vorratsrolle 6 schrittweise zu einer Aufwickelrolle 7 transportiert wird. Unterhalb des Kopierfensters 5 ist eine Kopierlichtquelle 8 angeordnet, die mittels eines Reflektors 9 Licht in einen zur Homogenisierung und Vergleichmäßigung dienenden Spiegelschacht 10 wirft. Am unteren Ende des Spiegelschachts 10 sind sogenannte subtraktive Farbfilter, insgesamt drei einfahrbar, von denen jedoch nur zwei Filter mit den Bezugszeichen 11 und 12 dargestellt sind. Die Betätigung der Filter erfolgt durch Elektromagnete 13, 14. An dem Kopiergerät ist ferner eine kastenförmige Auswerteeinrichtung 15 vorgesehen mit einem Einführschlitz 16 für auszuwertende Testkopien, deren Funktion im folgenden noch beschrieben wird. Der Kopiervorrichtung ist organisatorisch eine Entwicklungsvorrichtung 17 nachgeschaltet, die die Aufwickelkassetten 2 unmittelbar zum Akuppeln der Kopiermaterialenden an geeignete Transportmittel, wie ein Schleppband, aufnehmen kann. Am Ende der in bekannter Weise aus mehreren Tanks mit Transporteinrichtungen und einer Trockeneinrichtung aufgebauten Entwicklungsvorrichtung ist eine Aufwickelspule 18 angeordnet, auf die das aus dem Trockner austretende Material aufgewickelt wird.

In Fig. 2 ist ein sogenanntes Eichnegativ 19 dargestellt, das auf einem Filmstreifen 20 des üblichen Aufnahmematerials durch Aufbelichten und Entwickeln hergestellt ist. Der Filmstreifen weist die üblichen Perforationslöcher 20 a zum Transport in einer Kamera auf. In Zuordnung zu dem aufbelichteten Eichnegativ ist am Rand eine Kerbe 20 b angebracht, die zur richtigen Positionierung des Eichnegativs in dem Vorlagenfenster 5 dient. Das Eichnegative 19 selbst ist unterteilt in drei in Transportrichtung verlaufende Streifen, wobei der mittlere Streifen als Grautreppe ausgebildet ist. Die sieben Felder 19a, b, c, d, e, f und g sind in ihrer Schwärzung so abgestuft, daß das Feld 19 a praktisch ungeschwärzt, das Feld 19 g maximal geschwärzt und das mittlere Feld 19d eine Dichte von etwa 0,7 aufweist. Am oberen Rand der Grautreppenfelder sind maximal durchlässige Synchronisiermarken 19 i angebracht, die bei der Abtastung der Kopie ermöglichen, die einzelnen Felder deutlich voneinaner zu unterscheiden. Schließlich sind die frei bleibenden Flächen oberhalb und unterhalb der Grautreppe in einer etwa neutralen Farbe so geschwärzt, daß sich für die gesamte Vorlage eine mittlere Dichte ergibt.

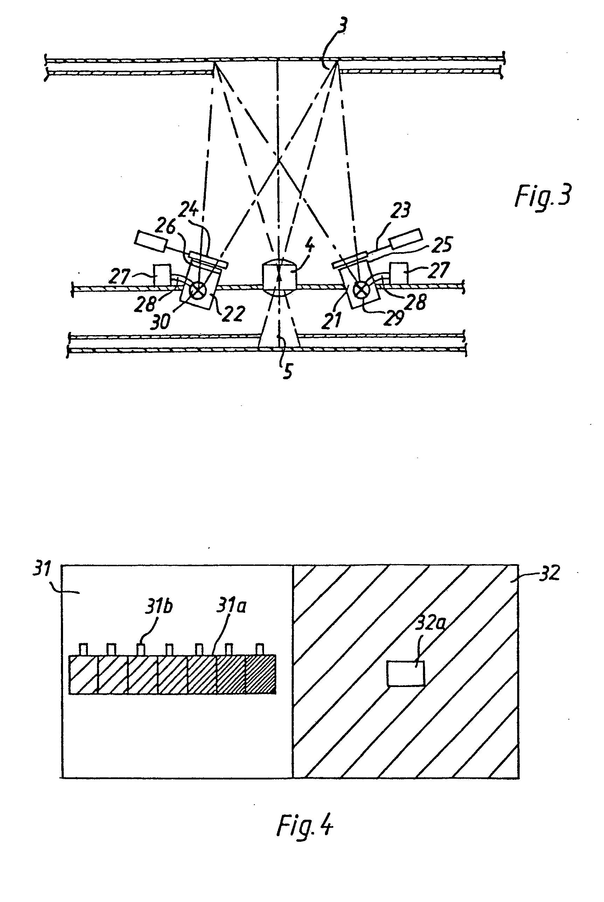

In Fig. 3 ist eine Aufbelichtungseinrichtung für eine Testkopie innerhalb der Kopiervorrichtung gemäß Fig. 1 genauer dargestellt. Beiderseits des Objektivs 4 ist je eine Normlichtquelle, bestehend aus je einer in einem topfartigen Gehäuse 21 bzw. 22 untergebrachten Lampe 29, 30, angebracht. Die Lampen werden zur Erzielung einer langzeitig konstanten Lampenhelligkeit mit Unterspannung betrieben. Die Lampenspannung kann dabei in bekannter Weise durch einem Konstanthalter konstant gehalten werden. Nachdem jedoch zur Überprüfung des Brennens der Lampe ohnedies ein fotoelektrischer Kontrollmeßempfänger 27 mithilfe eines Lichtleiters 28 zur Temperaturisolierung vorgesehen ist, kann durch Regelung der Lampenspannung auf konstantes Signal des Kontrollmeßempfängers 27 auch eine andere Art der Regelung der Lampenhelligkeit vorgenommen werden. Um bei Ausmessung der Testkopien in allen drei Farben Meßsignale in hinreichend genau reproduzierbarer Größe zu erzielen, ist in den Lampenstrom ein sogenanntes CC (color correction) Filter 25, 26 eingeschaltet. Dies entspricht in seiner Absorptionsstruktur etwa einem Konversionsfilter zur Belichtung von Kunstlichtfilm mit Tageslicht. Außerdem liegt im Strahlengang je ein elektromagnetisch betätigter Verschluß 23 bzw. 24, dessen Öffnungszeit verhältnismäßig lang und dementsprechend genau bemessen werden kann. Die Lampenhelligkeit ist etwa so eingestellt, daß mit einer Belichtungsdauer von wenigstens einer Sekunde eine mittlere Dichte der Testkopie von 0,7 erreicht wird.

In Fig. 4 ist nebeneinanderliegend auf einem Kopiermaterialband dargestellt eine Kopie 31 der Eichvorlage mit dem Graukeilbild 31 a, sowie den Synchronisiermarken 31 b. In der rechten Hälfte des dargestellten, zugeschnittenen Kopiermaterialstreifens ist die mittels der anhand von Figur 3 beschriebenen Testbelichtungseinrichtung aufbelichtete Testkopie 32 angeschlossen. Diese Testkopien werden dann je nach Ausbildung der Auswerle einrichtung 15 in die Öffnung 16 am Printer eingeführt und dort sowohl das mittlere Feld der Grautreppenkopie als auch ein bestimmter Bereich der Testkopie 32 auf die Dichte in allen drei Farben ausgemessen.

Die Wirkungsweise des erfindungsgemäßen Verfahrens kann wie folgt beschrieben werden:

Zur erstmaligen Eichung oder auch zur routinemäßigen Überprüfung des Betriebszustandes des Kopiergerätes und der nachfolgenden Entwicklung wird zunächst die Eichvorlage gemäß Figur 2 in den Strahlengang des Kopiergerätes im Bereich des Vorlagenfensters 5 eingebracht. Die Eichvorlage wird mittels einer in der Kopiervorrichtung vorhandenen, automatischen Farbsteuervorrichtung kopiert, derart, daß im Mittel eine Kopie mittlerer Dichte mit einen ungefärbten Grau erzielt wird. Dies entspricht der Normaleinstellung der Belichtungssteuervorrichtung. Die Steuerung der einzelnen Farbanteile wird dabei durch die Farbverschlüsse 11, 13 und 12, 14, bewirkt, die durch eine Vorrichtung etwa entsprechend der deutschen Patentschrift 2 246 466 gesteuert sind. Unmittelbar daran anschließend, d.h. nach dem nächsten Schaltschritt des Papiertransports, befindet sich in dem Kopierfenster 3 ein unbelichteter Abschnitt des Kopiermaterials, der durch die Testbelichtungseinrichtung gemäß Figur 3, gesteuert durch die beiden Verschlüsse 23, 23, wenigstens für die Dauer einer Sekunde belichtet wird. Die Farbe des Kopierlichts—eingestellt durch die Charakteristik der Filter 25 und 26—und durch die Helligkeit der Lampen führt zu einer Kopie von der Dichte etwa 0,7 in den Farben Blau, Grün und Rot, so daß jeder Farbanteil noch gut meßbar ist. Diese bieden auf dem Kopiermaterialstreifen nebeneinander aufbelichteten Bilder werden dann mit der Kassette 2 zu der Entwicklungsvorrichtung 17 gebracht und, da sie am Ende in die Kassette eingelaufen sind, gelangen sie am Anfang des Bandes durch die Entwicklungsvorrichtung und zu der Aufwickelspule 18, wo sie von dem übrigen Band abgetrennt werden können. Werden nun diese beiden Kopien 31 und 32 gemäß Fig. 4 an den Rändern sauber beschnitten und bis zu einem Anschlag in die Öffnung 16 der Auswerkeeinrichtung 15 eingeführt, so können dort je nach Ausbildung der Auswerkeeinrichtung entweder nur das Bild der Grautreppenstufe 19 d und bei Umschlag der entsprechende Bereich 32 a der Testkopie 32 in allen drei Farben ausgemessen werden oder es lassen sich beide zu messenden Flächen gleichzeitig abtasten. Zweckmäßigerweise wird von der Testkopie 32 auch nur ein verhältnismäßig kleiner Teil in festem Abstand zu den Kanten gemessen, um auf diese Weise Einflüsse ungleichmäßiger Ausleuchtung des Kopierfensters 3 durch die Normlichtquellen auszuscheiden.

Um die Meßergebnisse der Kopien 31, 32 auswerten zu können, müssen Sollwerte für die entsprechenden Meßwerte durch Erfahrung bzw. durch den Lieferer der Geräte festgelegt sein. Zu diesen Sollwerten oder Vergleichswerten lassen sich jeweils Differenzen bilden, wobei die Absolute Größe der Differenzwerte zu den Sollwerten Rückschlüsse auf den Betriebszustand von Kopiervorrichtung und Entwicklungsvorrichtung zulassen. Es lassen sich verschiedene Fälle unterscheiden:

1. Alle Differenzwerte für die beiden Meßwertgruppen aus den Kopien 31 und 32 sind kleiner als ein höchstzulässiger Größtwert, z.B. 0,02—Kopiervorrichtung und Entwicklungsvorrichtung produzieren ordnungsgemäße Kopien; Änderungen sind nicht erforderlich.

2. In mindestens einer der drei Farben ist die Differenz des Dichtewertes der mittleren Grautreppenstufe zu dem Sollwert größer als der höchstzulässige Größtwert und gleichzeitig liegen alle Differenzwerte zwischen den Dichten des Bereiches 32a und den Sollwerten innerhalb des durch den größtzulässigen Wert gegebenen Bereiches—die Entwicklungsvorrichtung liegt innerhalb der zulässigen Toleranzen, jedoch ist die Kopiervorrichtung außerhalb der zulässigen Toleranzen und bedarf der Nachjustierung. Diese kann bei Auswertung der Kopie des Eichnegativs gemäß Figur 2 nach der Lehre der DE—A—2911566 erolgen.

3. Alle Dichteabweichungen in einer oder mehreren Farben von den jeweiligen Sollwerten sind nach Betrag und Richtung gleich, jedoch größer als der höchstzulässige Wert von z.B. 0,02—die Kopiervorrichtung ist höchstwahrscheinlich in Ordnung, jedoch ist die Entwicklungsvorrichtung in einem unbefriedigenden Zustand und muß überprüft und nachjustiert werden.

Die Ergebnisse dieses Vergleiches können an dem Auswertgerät 15 z.B. durch Anzeigelampen oder durch Computerausdruck sichtbar gemacht werden; dazu enthält das Auswertegerät einen Rechner, der die gespeicherten Vergleichswerte enthält, der die nicht gleichzeitig vorhandenen Meßwerte ebenfalls speichert und jeweils die logischen Verknüpfungen der Vergleichsergebnisse vornimmt. Ein solcher Rechner ist auch in der Lage, durch besonders charakteristische Farbverschiebungen sich anzeigende Fehler der Entwicklungsvorrichtung zu analysieren und anzuzeigen, ggfs. durch automatische Regenerierung auch zu korrigieren. Die automatische Korrektur der Kopiervorrichtung kann entweder sofort nach Vorliegen der Meßergebnisse automatische erfolgen oder erst nach kritischer Überprüfung durch eine Bedienungsperson und entsprechende Freigabe.

Die Aufbelichtung der Testbelichtung 32 gemäß Fig. 4 könnte in Abweichung von Fig. 3 auch an anderer Stelle des Kopiergerätes oder außerhalb erfolgen.

Das Einbringen des Eichnegativs in den Kopierlichtstrahlengang erfolgt für Ersteichungen durch Einlegen von Hand. Für Routineüberprüfungen kann ein solches Eichnegativ am Ende einer Negativrolle angeklebt sein so daß automatisch an deren Ende eine Eichvorlagenkopie gezogen wird.

**Patentansprüche**

1. Verfahren zur Überprüfung des Betriebszustandes einer Kopiervorrichtung und der nachgeschalteten Entwicklungsvorrichtung beim Herstellen von Farbkopien, wobei auf dasselbe, gleichen Entwicklungsbedingungen unterworfene Kopiermaterial unter Benutzung der automatischen Belichtungssteuerung der Kopiervorrichtung eine Kopie einer Eichvorlage und eine Testbelichtung mit vorgegebener Kopierlichtmenge und -farbe gegeneinander versetzt aufbelichtet werden und wobei die Dichtewerte der Eichvorlagenkopie und der Testkopie nach der Entwicklung gemessen und zur Beurteilung des Betriebzustandes der Entwicklungsvorrichtung und/oder der Kopiervorrichtung ausgewertet werden, dadurch gekennzeichnet, daß die Meßwerte der Testkopie und der Eichvorlagenkopie einer Vergleichsvorrichtung mit fest vorgegebenen Vergleichswerten zugeführt werden, daß

a) für den Fall, daß beim Vergleich der gemessenen Kopiedichtewerte von Eichvorlagenkopie und Testkopie mit den Vergleichswerten in allen drei Farben die Abweichungen absolut unter einem vorgegebenen, höchstzulässigen Differenzbetrag, insbesondere unter 0,02 liegen, ein ordnungsgemäßer Betriebszustand von Entwicklungs- und Kopiergerät festgestellt wird, daß

b) für den Fall, daß beim Vergleich der Kopiedichtewerte in den drei Farben wenigstens ein Farbdichtewert der Eichvorlagenkopie um mehr als den höchstzulässigen Differenzbetrag und die drei Farbdichtewerte der Testkopie von den Vergleichswerten um weniger als den höchstzulässigen Differenzbetrag abweichen, ein ordnungsgemäßer Zustand der Entwicklungsvorrichtung und eine Abweichung der Kopiervorrichtung festgestellt und letztere entsprechend nachjustiert wird und daß

c) für den Fall, daß die Dichtewerte der beiden Kopien in den drei Farben Abweichungen von den Vergleichswerten aufweisen, die in Größe und Richtung weitgehend übereinstimmen, der ordnungsgemäße Zustand des Kopiergerätes, und ein Weglaufen des Entwicklungsgerätes festgestellt und eine Korrektur des letzteren durchgeführt, wird.

2. Vorrichtung zur Durchführung des Verfahrens nach Anspruch 1, dadurch gekennzeichnet, daß die Vorrichtung zum Aufbelichten der Testbelichtung innerhalb des Kopiergerätes angeordnet ist.

3. Vorrichtung nach Anspruch 2, dadurch gekennzeichnet, daß die Lichtquelle für das Belichten der Testkopie neben dem Objektiv angeordnet und auf das Kopierfenster gerichtet ist.

4. Vorrichtung nach Anspruch 2, dadurch gekennzeichnet, daß an der Papierbahn ein zusätzliches Kopierfenster vorgesehen ist, über dem eine Lichtquelle angeordnet ist.

5. Vorrichtung nach Anspruch 3 oder 4, dadurch gekennzeichnet, daß die Lichtquelle für das Belichten der Testkopie eine hochkonstante, mit konstant gehaltener Unterspannung betriebene Lampe geringer Helligkeit umfaßt, der ein Farbkorrekturfilter vorgeschaltet ist und zu deren Überwachung über einen Lichtleiter ein Kontrollmeßempfänger vorgesehen ist.

6. Vorrichtung nach Anspruch 3 oder 4, dadurch gekennzeichnet, daß die Normlichtquelle einen fotoelektrischen Kontrollmeßempfänger umfaßt, der über einen Lichtleiter mit der Lampe optisch verbunden ist und der den Lampenstrom auf konstante Helligkeit regelt.

7. Vorrichtung nach Anspruch 5 oder 6, dadurch gekennzeichnet, daß zwischen Lampe und Kopierfenster ein Verschluß mit hochgenauer Öffnungszeit angeordnet ist und die Lampe ständig bestromt ist und daß die Lampenhelligkeit so bemessen ist, daß eine mittlere Dichte der Testkopie von ca. 0,7 mit einer Kopierzeit von wenigstens einer Sekunde erreicht wird.

8. Vorrichtung nach einem der Ansprüche 2 bis 7, dadurch gekennzeichnet, daß eine von dem Auslaufen eines Bandendes aus der Vorratskassette des Kopiergerätes oder vom Auslaufen des Endes des Kopiervorlagenbandes aus der Vorratsspule gesteuerte Programmiereinrichtung in dem Kopiergerät vorgesehen ist, die jeweils am Bandende die Eichvorlage in die Kopierstellung bringt, eine Eichvorlagenkopie veranlaßt und auf dem nächsten Kopiermaterialabschnitt eine Testbelichtung durchführt.

9. Vorrichtung zur Durchführung des Verfahrens nach Anspruch 1, dadurch gekennzeichnet, daß eine Abtastvorrichtung für die Eichvorlagenkopie und/oder die Testkopie mit einer Einführöffnung für diese Kopien versehen und mit einem Rechner verbunden ist, der die Vergleiche ausführt und ein entsprechendes Signal für die verschiedenen Betriebszustände der Entwicklungsvorrichtung und der Kopiervorrichtung aufweist.

10. Vorrichtung nach Anspruch 9, dadurch gekennzeichnet, daß die Abtasteinrichtung in die Kopiervorrichtung integriert und mit einer Vorrichtung zur automatischen Jusierung des Kopiergerätes verbunden ist.

**Revendications**

1. Procédé pour contrôler l'état de fonctionnement d'un appareil de tirage et d'un appareil de développement monté en aval pour la préparation de copies en couleur, dans lequel, sur le même support de copie soumis à de mêmes conditions développement et en utilisant le dispositif de commande automatique d'exposition de l'appareil de tirage, on expose, en décalé l'une par rapport à l'autre à une quantité et couleur de lumière prescrites, une copie d'un original d'étalonnage et une exposition d'essai et, après l'exposition, on mesure les valeurs de densité de la copie de l'original d'étalonnage et la copie d'essai et on les exploite pour juger de l'etat de fonctionnement de l'appareil de développement et/ou de l'appareil de tirage, caractérisé en ce qu'il consiste à fournir les valeurs de mesure de la copie d'essai et de la copie de l'original d'étalonnage à un dispositif de comparaison ayant des valeurs de comparaison fixées à l'avance,

a) dans le cas où, en comparant les valeurs mesurées de densité de la copie de l'original d'étalonnage et de la copie d'essai aux valeurs de comparaison, les écarts dans chacune des trois couleurs sont inférieurs en valeur absolue, à une plus grande différence admissible prescrite, notamment à 0,02, à constater un bon état de fonctionnement de l'appareil de développement et de l'appareil de tirage,

b) dans le cas où, en comparant les valeurs de densité des copies dans chacune des trois couleurs, l'une au moins des valeurs de densité de couleur de la copie de l'original d'étalonnage s'écarte de plus de la plus grande différence admissible et les trois valeurs de densité de couleur de la copie d'essai s'écartent de moins que la plus grande valeur admissible, à constater un bon état de l'appareil de développement et une anomalie de l'appareil de tirage, et à procéder en conséquence à un nouveau réglage de celui-ci,

c) dans le cas où les valeurs de densité des deux copies présentent dans chacune des trois couleurs des écarts par rapport aux valeurs de comparaison, qui concordent dans une grande mesure en grandeur et en direction, à constater le bon état de l'appareil de tirage et une dérive de l'appareil de développement et à effectuer une correction de ce dernier.

2. Dispositif pour exécuter le procédé suivant la revendication 1, caractérisé en ce que le dispositif pour exposer l'exposition d'esssai est disposé à l'intérieur de l'appareil de tirage.

3. Dispositif suivant la revendication 2, caractérisé en ce que la source lumineuse pour l'exposition de la copie d'essai est disposée à côté de l'objectif et est dirigée sur la fenêtre de tirage.

4. Dispositif suivant la revendication 2, caractérisé en ce que, sur la bande de papier, est prévue une fenêtre de tirage supplémentaire au-dessus de laquelle est disposée une source lumineuse.

5. Dispositif suivant la revendication 3 ou 4, caractérisé en ce que la source lumineuse pour l'exposition de la copie d'essai comprend une lampe très constante fonctionnant en sous-tension maintenue constante, devant laquelle est monté un filtre de correction de couleur et pour le contrôle de laquelle est prévu un récepteur de mesure de contrôle relié par l'intermédiaire d'une fibre optique.

6. Dispositif suivant la revendication 3 ou 4, caractérisé en ce que la source lumineuse normalisée comprend un récepteur de mesure de contrôle photoélectrique qui est relié optiquement à la lampe par une fibre optique, et qui régle le courant de la lampe à une luminosité constante.

7. Dispositif suivant la revendication 5 ou 6, caractérisé en ce qu'entre la lampe et la fenêtre de tirage est interposé un obturateur à durée d'ouverture très précise, et la lampe est alimentée constamment en courant électrique, et en ce que la luminosité de la lampe est telle que l'on obtienne une densité moyenne de la copie d'essai de 0,7 environ, avec une durée de tirage d'au moins 1 seconde.

8. Dispositif suivant l'une des revendications 2 à 7, caractérisé en ce que, dans l'appareil de tirage, est prévu un dispositif de contrôle de programme qui est commandé par la sortie d'une extrémité de bande de la cassette de réserve de l'appareil de tirage, ou par la sortie de l'extrémité de la bande originale de tirage de la bobine de réserve et qui met, à l'extrémité de la bande, l'original d'étalonnage en la position de tirage, fait faire une copie de l'original d'étalonnage, et effectue une exposition d'essai sur le tronçon de support de copie immédiatement suivant.

9. Dispositif pour exécuter le procédé suivant la revendication 1, caractérisé en ce qu'un dispositif de balayage pour la copie de l'original d'étalonnage et/ou la copie d'essai est muni d'une ouverture d'introduction pour ces copies et est relié à une calculatrice qui effectue les comparaisons et donne un signal correspondant pour les divers états de fonctionnement de l'appareil de développement et de l'appareil de tirage.

10. Dispositif suivant la revendication 9, caractérisé en ce que le dispositif de balayage est intégré dans l'appareil de tirage et est relié à un dispositif pour ajuster automatiquement l'appareil de tirage.

## Claims

1. A method of checking the operational state of a copying device and the development device connected downstream when producing colour copies, wherein a copy of a calibration original and a test exposure made with a predetermined quantity and colour of copying light are exposed offset with respect to one another on the same copying material and are subjected to identical development conditions while using the automatic exposure control of the copying device, and wherein the density values of the calibration original copy and the test copy are measured after development and are evaluated for assessing the operational state of the development device and/or the copying device, characterised in that the measured values of the test copy and the calibration original copy are supplied to a comparison device with strictly predetermined comparison values and in that,

a) if, during comparison of the measured copy density values of the calibration original copy and test copy with the comparison values in all three colours, the deviations lie completely below a predetermined highest admissable differential amount, in particular below 0.02, a regular operational state of the development and copying apparatus is ascertained,

b) if, during comparison of the copy density values in the three colours, at least one colour density value of the calibration original copy deviates by more than the highest admissible differential amount and the three colour density values of the test copy deviate from the comparison values by less than the highest admissible differential amount, a regular state of the development device and a deviation of the copying device is ascertained and the latter is correspondingly subsequently adjusted, and

c) if the density values of both copies in the three colours deviate from the comparison values which correspond to a large extent in respect of size and direction, the regular state of the copying apparatus and a drift of the development apparatus is ascertained and a correction of the latter is carried out.

2. A device for carrying out the method according to claim 1, characterised in that the device for exposing the test exposure is arranged within the copying apparatus.

3. A device according to claim 2, characterised in that the light source for exposing the test copy is arranged beside the lens and is directed towards the copying window.

4. A device according to claim 2, characterised in that on the paper path an additional copying window is provided, above which a light source is arranged.

5. A device according to claim 3 or 4, characterised in that the light source for exposing the test copy includes a highly constant lamp with a low degree of brightness with constantly maintained undervoltage, a colour correction filter being connected upstream thereof and a control measurement receiver being provided via a light conductor to monitor the lamp.

6. A device according to claim 3 or 4, characterised in that the standard light source includes a photoelectric control measurement receiver which is optically connected to the lamp via a light conductor and which regulates the lamp current at constant brightness.

7. A device according to claim 5 or 6, characterised in that a shutter with a very precise opening time is arranged between the lamp and the copying window and the lamp is constantly supplied with current, and in that the lamp brightness is measured such that an average density of the test copy of approx. 0.7 is achieved with a copying time of at least one second.

8. A device according to one of claims 2 to 7, characterised in that a programming device is provided in the copying apparatus and is controlled by a strip end running out of the supply cassette of the copying apparatus or the end of the copying original strip running out of the supply spool, the programming device bringing the calibration original into the copying position in each case at the strip end, producing a calibration original copy and carrying out a test exposure on the next section of copying material.

9. A device for carrying out the method according to claim 1, characterised in that a scanning device for the calibration original copy and/or the test copy is provided with a feed opening for these copies and is connected to a

11 0 025 078 12

computer, which carries out the comparisons and comprises a corresponding signal for the different operational states of the development device and the copying device.

10. A device according to claim 9, characterised in that the scanning device is integrated in the copying device and is connected to a device for automatically adjusting the copying apparatus.

0 025 078

Fig.1

Fig. 1A

Fig 2

1

Fig.3

Fig.4